Europäisches Patentamt

(19) European Patent Office

Office européen des brevets

(11) Publication number: **0 034 269**
**B1**

(12) **EUROPEAN PATENT SPECIFICATION**

(45) Date of publication of patent specification: 02.05.84

(21) Application number: 81100490.2

(22) Date of filing: 23.01.81

(51) Int. Cl.³: **G 03 B 27/62,**
**G 03 G 15/00**

(54) Recirculating document feeder.

(30) Priority: 19.02.80 US 122164

(43) Date of publication of application:
26.08.81 Bulletin 81/34

(45) Publication of the grant of the patent:
02.05.84 Bulletin 84/18

(84) Designated Contracting States:
DE FR GB

(56) References cited:
EP - A - 0 002 878
US - A - 3 343 450
US - A - 3 770 348
US - A - 3 929 327

IBM TECHNICAL DISCLOSURE BULLETIN, vol.
17, no. 10, March 1975, New York, US, K.A.
LENNON et al. "Sheet positioning apparatus",
pages 2971

(73) Proprietor: International Business Machines
Corporation
Old Orchard Road
Armonk, N.Y. 10504 (US)

(72) Inventor: Edwards, Earl Garland
510 Skytrail Road
Boulder Colorado 80302 (US)
Inventor: Robinson, Jerry Thomas
1329 Garden Circle
Longmont Colorado 80501 (US)
Inventor: Wilzbach, Bernard Lee
925 Schofield
Berthoud Colorado 80513 (US)

(74) Representative: Petersen, Richard Courtenay
IBM United Kingdom Patent Operations Hursley
Park
Winchester Hants. SO21 2JN (GB)

Courier Press, Leamington Spa, England.

## Recirculating document feeder

The present invention relates to recirculating document feeders, particularly for use in a moving-document copier where an original document moves through a stationary scanning station once for each copy which is to be made of the document.

Moving-document copiers with recirculating paper paths along which a sheet of paper is recirculated, are known. It is also known that document registration must be accurately maintained as the original document resides in or passes through the scanning station. More specifically, the scanning station usually comprises a linear viewing slot which extends normal to the direction of document movement. One of the side edges of a rectangular document is usually registered against a stationary reference surface which extends parallel to the direction of document movement. This surface operates to maintain the document at a known position during scanning.

In such a recirculating paper path the document must be accurately registered for each pass through the scanning station.

Reliable document feed requires the avoidance of document jams as documents pass through the recirculating paper path.

US—A—3,770,348 discloses a recirculating document feeder comprising a document entry station, a stationary imaging station for line-scanning an original document moving therepast, and a part-cylindrical surface movable selectively to turn the document into a recirculating path to the entry station.

US—A—3,343,450 discloses a recirculating document feeder with a stationary imaging station, in which feeder documents are given an intentional skew in one direction and are thereafter deskewed by a part-cylindrical turn-around guide whose axis is approximately perpendicular to the document path and is adjustable to give skew to documents in the other direction to correct any skew.

According to the invention, a recirculating document feeder comprising a document entry station including entry alignment means for aligning a document against a longitudinally extending side reference edge, a stationary imaging station for line-scanning an original document moving therepast, and means selectively to turn the document into a recirculating path including part of the reference edge back to the entry station, is characterised in that the turning means comprises a skewed turn-around guide formed as a partial cylinder whose cylindrical axis is inclined to a perpendicular from the reference edge, so as to cause the leading edge of a document to emerge from the guide skewed, so that the corner adjacent the reference edge is displaced therefrom without introducing a force which may disturb registration of the portion of the document then remaining in the imaging station, and recirculating alignment means downstream of the guide to re-align the document against the reference edge.

In an embodiment of the present invention, a copier has a recirculating document feeder which moves an accurately registered document through a scanning station to thereby form a flowing line-image of the document on a precharged, moving photoconductor, for example a photoconductor drum.

The entry station of the feeder includes a resilient, cupped drive roller which transports an original document in the direction of feed, to register the leading edge against a closed gate, and also transports the document laterally to register its side edge against a fixed-position registration guide surface (side reference edge). This registration guide extends for a large part of the recirculation path which will be used when multiple copies are requested by the operator.

At a time determined by the position of the photoconductor drum, the gate opens, and the original document is transported along a substantially flat plane which includes the imaging station. Thereafter, and while a trailing portion of the document still resides in the imaging station, the leading edge encounters a turn-around guide.

This turn-around guide is operable only when multiple copies of the original document are requested.

It has been found that a jam is most likely to occur at the corner of the leading edge of the document, which is adjacent the side reference edge, and when this corner passes through the the turn-around guide. In order to minimize the risk of a jam , the above-mentioned turn-around guide, in the form of a partial cylinder, has its cylindrical axis skewed in a direction such that this corner of the document leaves the guide before the remaining portion of the leading edge. As a result, this corner is pulled away from the side reference edge, without introducing a force on the document so as to disturb registration of the trailing portion of the document which is still in the imaging station.

After such skewing, the document continues being driven in a flat elevated plane, and in the direction of sheet feeding, i.e. a direction normal to the direction along which the linear viewing station lies. When the leading edge leaves the turn-around guide, it is brought under the influence of drive rollers which produce a sheet drive component in a direction parallel to the reference edge. The leading edge next encounters the resilient, cupped drive roller which tends to re-align the document against the registration guide surface.

The leading edge then encounters a second non-skewed turn-around guide. The document then re-enters the original portion of its path, and again comes under the aligning influence of the cupped drive roller.

The pivotal position of the skewed turn-around guide, about its cylindrical axis, is controlled by a copy request counter. When multiple copies are requested, this guide is pivoted to intercept the leading edge, as above described. When all copies have been imaged (or if only one copy is requested), the guide is positioned so as not to intercept the leading edge. As a result, the document exits to an exit tray.

The scope of this invention is defined by the appended claims; and how it can be carried into effect is hereinafter particularly described with reference to the accompanying drawings, in which:—

FIGURE 1 is a side schematic view, partly in section, of part of a xerographic copier including a document feeder according to the present invention;

FIGURE 2 is a top perspective exploded view of part of the document feeder of Fig. 1;

FIGURE 3 is a sectional view, to an enlarged scale, of part of Fig. 2;

FIGURE 4 is a side view, partly in section, to an enlarged scale, of part of Fig. 1;

FIGURE 5 is a side view, partly in section, of a copy request counter used in the feeder of Fig. 1; and

FIGURE 6 is a side schematic view of another form of copier with a document feeder according to the invention.

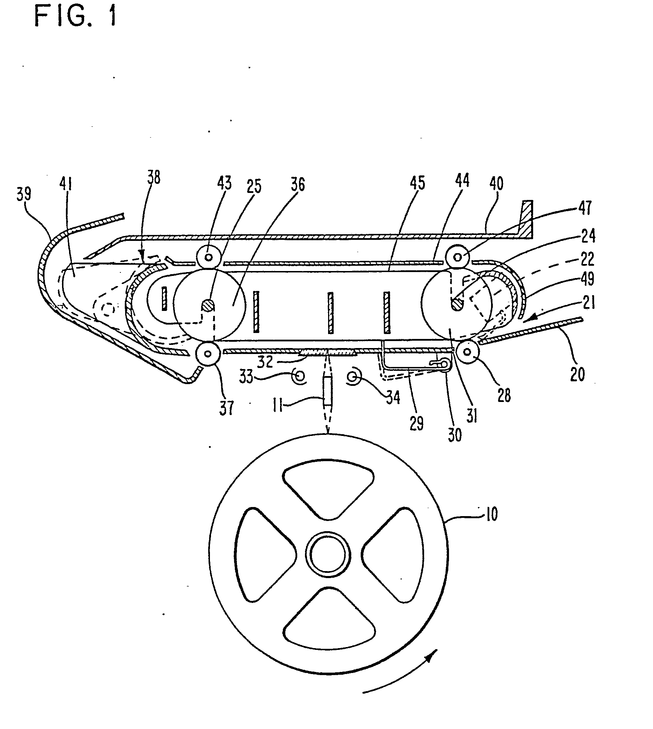

In a copier (Fig. 1) to which the present invention is applicable, an original document (not shown) is moved over a document glass 32 at a linear speed equal to the peripheral linear speed of a rotating photoconductor drum 10. Light from two linear fluorescent lamps 33 and 34 passes through the glass 32 to illuminate a line portion of the document and to be reflected off the document, passing through a linear fibre optic array 11 to form a latent image on the photoconductor drum 10. Thus, a flowing line-image of the original document is produced on the photoconductor drum.

When multiple copies of an original document are requested, the document is recirculated past the imaging station once for each copy. When all copies have been imaged, the original document exits to an exit tray.

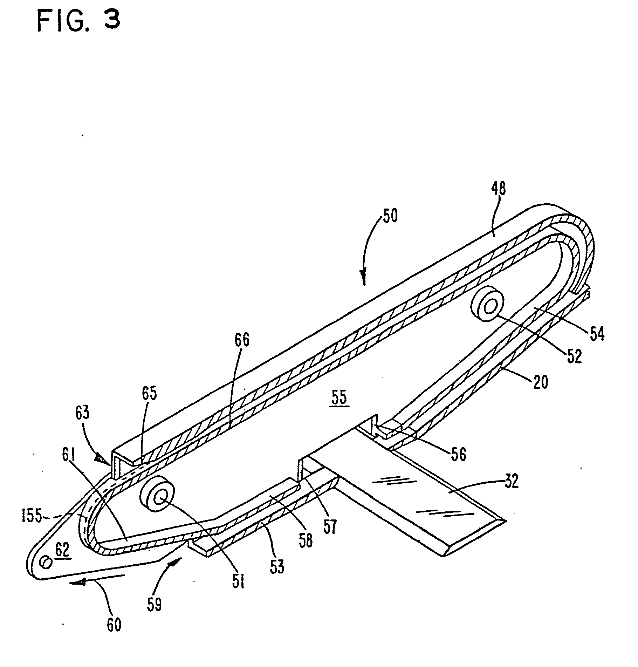

In the embodiment of the invention illustrated in Figs. 1 to 4 an original document is placed in a metallic entry tray 20 with the side-to-be-copied facing down, and the rear edge aligned against the vertical plane of rear edge reference surface 55 (Fig. 3) of a member 50.

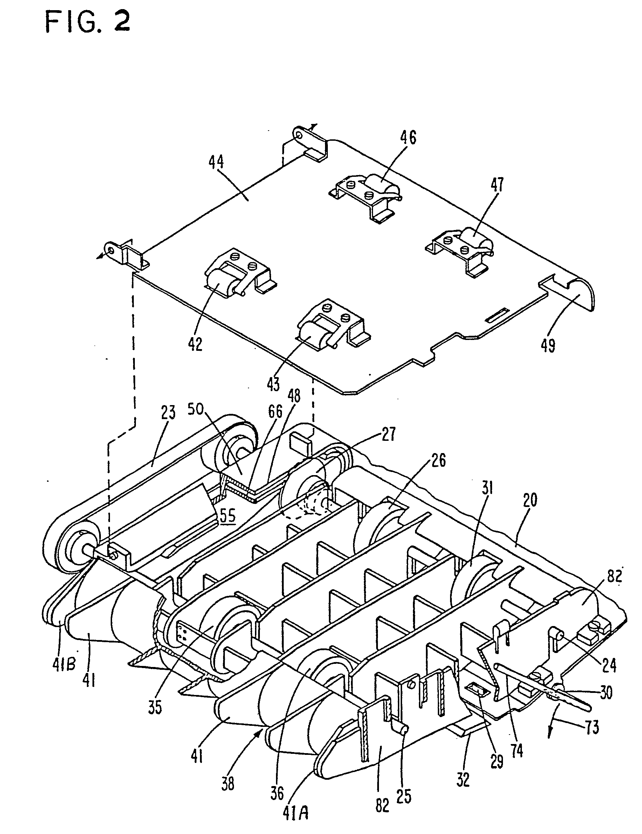

A document for example, letter size, 215.9 mm × 279.4 mm (8.5 × 11 inch), is inserted narrow edge leading into a gap 21, and raises the operating arm of a switch 22 which indicates the presence of a document and causes clockwise movement of drive belt 23 (Fig. 2). This causes shafts 24 and 25 to be rotated, carrying with them rollers 27, 26 and 31, and 35 and 36, respectively. Rollers 26 and 31 are drive rollers and co-operate with lower idler rollers 28 and upper idler rollers 46 and 47 to form sheet drive nips. Roller 27 is a cupped roller. The sheet drive force generated by the two nips between drive rollers 26 and 31 and idler rollers 28 is parallel to the plane of the side reference edge surface 55 and normal to the axis of the shaft 24. Cupped roller 27 co-operates with and deforms against the surface of the entry tray 20 to produce a sheet drive force which is skewed or inclined towards the reference edge surface 55, that is, the sheet drive force has a component parallel to the axis of the shaft 24 towards the surface, as well as a main component normal to the axis of the shaft 24. As a result, the document is automatically aligned with its leading narrow edge against the raised fingers of a paper gate 29, and with its rear long edge against the reference edge surface. The metal fingers of the gate 29 (Fig. 2) penetrate the entry tray 20 and establish a gate which is parallel to the axis of the shaft 24 and parallel to the imaging station established by fibre optic array 11 and document glass 32.

The copy cycle may now begin. Since photoconductor 10 must always be in the same given position, in its counterclockwise rotation, at the beginning of a copy cycle, a particular rotary position of the drum becomes the command parameter for opening gate 29. This can be accomplished mechanically, as by cam means, or electrically, as by a drum position transducer and logic or by microcomputer control of an electromechanical actuator. In any case, counterclockwise rotation of a mounting shaft 30 for the gate fingers is produced to open the gate 29 by lowering the fingers.

When the gate 29 opens, the document is fed over the document glass 32 and the lamps 33 and 34 operate to illuminate a line portion of the moving document. Light is thus reflected off the moving document and passes down through linear fibre optic array 11 to produce a flowing image of the document on the rotating photoconductor drum 10.

The shafts 24 and 25 are parallel and are spaced approximately 127 mm (5 inches) apart.

When the leading edge of the document has moved approximately 101.6 mm (four inches) beyond the open gate 29, it comes into the drive nips formed by drive rollers 35 and 36 and co-operating lower idler rollers. Thus a letter size document spans the space between these two document drive means, as an intermediate portion of the document is passing over the document glass 32 through the imaging station.

Shortly thereafter, and while part of the document passes through the imaging station, the leading edge reaches the general location 59 (Fig. 3), at which point the document has to be diverted to one of two paths, depending upon whether or not more than one copy is to be made.

At this location is the edge of a pivoted concave turn-around guide 38.

If only a single copy is to be made, the guide 38 is pivoted to the position shown in dotted lines in Fig. 1. As a result, the leading edge of the document passes below the guide 38 and continues to a fixed turn-around guide 39, by which it is directed up into an original document exit tray 40. The guide 38 has a plurality of extending ribs 41 (Figs. 1 and 2) which define the upper limits of this exit path upon the guide 39 for the document.

If more than one copy is to be made, the guide 38 is pivoted to the position shown in full lines in Fig. 1. In this position, the leading edge of the document is intercepted and diverted upwardly to an upper, flat run of the loop-shaped recirculating document path of the feeder.

The guide 38, which is preferably of plastic material, is substantially semi-cylindrical and its internal concave surface is formed as part of a circular cylinder whose axis, whilst in the same or a parallel, plane as the axes of the shafts 24 and 25, is not parallel to the axes of shafts 24 and 25. The cylindrical axis of the guide 38 is closer to the shaft 25 at the end adjacent the reference edge surface 55 of the member 50 than it is at the other end. Thus the cylindrical axis of the guide 38 is skewed or inclined to an axis normal to the surface 55, that is to an axis normal to the direction of document feed.

This skewing of the guide 38 is not great. For example, with a guide 38, 221 mm, (8.7 inches) long, the displacement of the cylindrical axis from the shaft 25 is only 3.175 mm (0.125 inches) greater at the end remote from the surface 55 than at the other end. Thus the inclination of the cylindrical axis of the guide 38 to the axis normal to the surface 55 is approximately 49', that is less than 1°.

The guide 38 has at its ends two ribs 41A and 41B, respectively by which it is pivotally mounted on the member 50 and a side plate 82 (Fig. 2), about an axis which is parallel to the axis of the shaft 25, and thus parallel to the leading edge of an advancing document. For this purpose the rib 41B is slightly longer than rib 41A, and the ribs 41 between the end ribs 41B and 41A are progressively shorter.

The member 50 is preferably formed of plastics material and includes projecting bosses 51 and 52 which rotatably receive shafts 25 and 24, respectively. Entry tray 20 co-operates with platen 32 and a flat wall 53 to establish the lower guiding surface for a document. A channel for the rear longitudinal edge of the document is formed between entry tray 20 and a horizontal portion 54 of a wall extending a short distance from the vertical document referencing plane defined by the surface 55. At the entry to platen 32, the portion of the member 50 with surface 55 and the extending wall is cut away leaving a surface 56 perpendicular to the surface 55. On the other side of the platen 32 an inclined surface 57 is formed in the member 50 leading to the surface 55. The flat wall 53 receives a document from the platen 32 and a channel is formed for the rear longitudinal edge of the document between the wall 53 and a horizontal portion 58 of the wall extending from the surface 55 of the member 50.

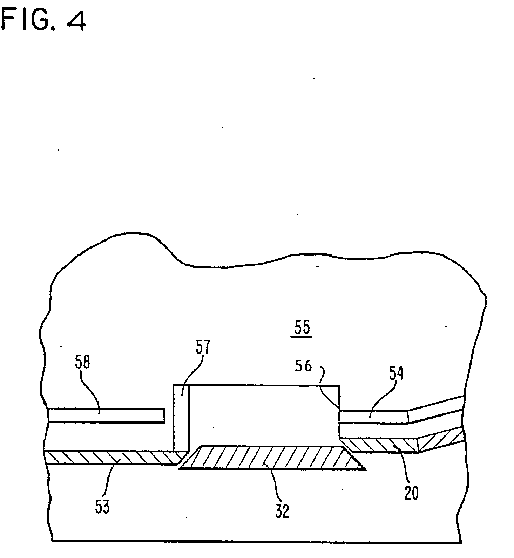

As seen in Fig. 4, entry tray 20 guides the document slightly above the top surface of glass platen 32, whereas the upper surface of wall 53 is spaced slightly below the top surface of the platen.

The surface 55 and wall 53 (Fig. 3) end at document path point 59, where the document either exits to the guide 39 (Fig. 1) in the direction of arrow 60, or is recirculated by the skewed guide 38 (not shown in Fig. 3). The wall extending from the surface 55 of the member 50 continues from the portion 58 as an inclined and curved wall portion 61 spaced from the guide 38. Projecting from the member 50 is an extension 62 with a boss on which the rib 41B is pivotally mounted. The vertical wall of the extension 62 is not in the same plane as surface 55, but is spaced about 5 mm (0.2 inch) therefrom. At document path point 63, the surface 55 and a horizontally extending wall 48 begin, but the edges facing the direction of document travel include two entry inclined surfaces 65 to guide a document between wall 48 and a horizontal document supporting portion 66 of the wall extending from surface 55.

As the leading edge of document encounters the guide 38, the rear corner in contact with the surface 55 will be the first point on the leading edge to encounter the concave turn-around surface of the guide. As a result, this corner of the document begins its upward path, and in so doing, this corner experiences a component of movement which is parallel to the cylindrical axis of the guide 38 and in a direction away from the surface 55. When the entire leading edge of the document is on the cylindrical surface of the guide 38, it is skewed to the axis of the shaft 25, and the corner of the leading edge of the document closer to the surface 55 leaves the guide 38 before the other corner. The leading edge, after 180° turnaround has a skew of 1° 38' from the axis of the shaft 25.

Thus, the corner, whose path relative to the surface of the wall portion 61 is shown by dotted line 155 in Fig. 3, is pulled away from the surface 55 of document registration, and the likelihood of document jam against the edge of member 50 at the document path point 63 is minimized.

It will be appreciated that although the document emerges from the guide 38 with the leading edge skew and moving in a direction slighly inclined to the surface 55, there is no force to disturb the portion of the document then remaining on the platen 32. The rollers 35 and 36 and rollers 37 continue to draw the document across the platen with the rear edge in registration with the surface 55.

The leading edge of the document is next brought under the driving influence of the nips between the driven rollers 35 and 36, and idler rollers 42 and 43 (Fig. 2). Rollers 42 and 43 are spring loaded against rollers 35 and 36 by leaf springs, by which the rollers 42 and 43 are mounted on a metal cover 44. Cover 44 is hinged to the wall 48 and forms an extension thereof when engaged by a latch on the side member 82. The cover 44 also carries spring-biased idler rollers 46 and 47 to co-operate with driven rollers 26 and 31. The document-path spacing of the upper and lower drive nips formed by the upper and lower surfaces of rollers 35 and 36 is such that spaced portions of the document are simultaneously under the driving influence of all of these drive nips. However, the portion of the document in the upper nips is skewed, whereas the portion of the document in the lower nips is not.

The document continues to be driven with its longitudinal edge slightly inclined away from the surface 55 through the upper flat run 45 of the loop-shaped path, until its leading edge comes under the driving influence of the upper portion of cupped roller 27 and the upper nips of driven rollers 26 and 31. Cupped roller 27 forms a drive nip with wall 48 of member 50. As a result, the skewed leading portion of the document now comes under the re-aligning influence of cupped roller 27, and a document drive force now begins to effect re-alignment of that leading portion.

During such re-alignment, the longitudinal edge of the document is brought into engagement with the surface 55. If the trailing portion of the document is still in the lower nips of the driven rollers 35 and 36 and the idler rollers 37, slippage occurs in the upper nip of the driven roller 36 and idler roller 43. The forward portion of the document pulls away from the surface of the guide 38, until the trailing edge of the document is released from the lower nips of the driven rollers 35 and 36.

As it passes beyond the roller 27, the leading edge of the document encounters a non-skewed turn-around guide 49 formed in the cover 44 and as a continuation of the wall 48, and the document re-enters the entry tray 20 where its presence is sensed by the operating arm of switch 22. By the time the leading edge has reached now-closed gate 29, the document has been re-aligned to the rear reference edge, and the document awaits the drum position, during another copy cycle, when its presence is needed at the imaging station.

The surface 55, which provides the reference edge for the rear longitudinal edge of a document is only required at the side of the document-receiving channel, that is between walls 20 and 54, 53 and 58, and 66 and 48. Because there is a long discontinuity in the surface 55 between the end of the wall 53 and the beginning of the wall 48, there is a danger of a recirculated document catching its leading edge rear corner against a fixed part of the apparatus. The rear corner is drawn forward away from the surface 55 by the skewed turn-around guide 38 to minimise the risk of such jamming, without affecting the aligned passage of the document between the rollers 35 and 36 and 37.

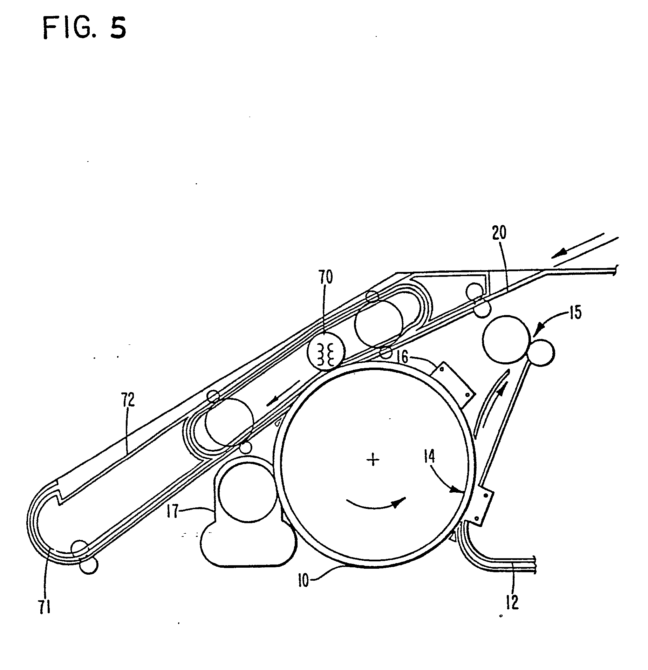

In an alternative embodiment of the invention (Fig. 5), original documents are fed onto an entry tray 20, aligned against a reference surface and fed under an elongated, tubular light source 70 immediately above the imaging position on the rotating photoconductor drum 10. The recirculating path is similar to that in Fig. 1, with an alternative exit turn-around guide 71 and original document exit tray 72.

A copy sheet to receive toner from the drum 10 enters at 12 and receives toner at a transfer corona station 14 which is fused to the sheet by hot roll fuser 15. The copier is a two-cycle copier in which, during one cycle, the drum is imaged by the light source 70 through a document, toner is applied to the image by a magnetic brush developer 17, toner is transferred at the station 14, and the drum surface given a pre-clean charge at a corona station 16. During the next cycle, whilst the original document is recirculating, the brush developer cleans the photoconductor surface of residual toner, the corona station 14 precharges the surface, and the corona station 16 provides a final charge ready for imaging during the following cycle. The copier for Fig. 1 is of similar construction.

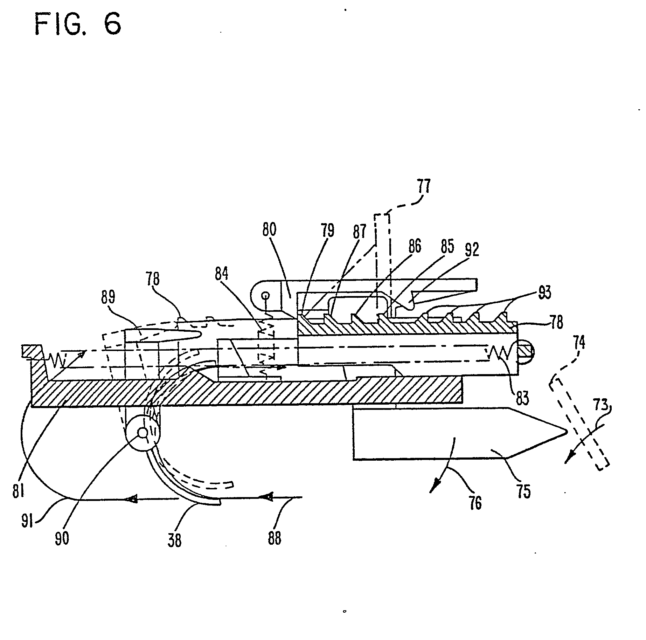

In both document feeders, a copy request counter (Fig. 6) may co-operate with the document gate and skewed turn-around guide to produce recirculation of the original document for multiple copy job requests.

The copy request counter produces recirculation of an original document when multiple copies are requested. While this counter is shown as a mechanical counter, the present invention is not to be restricted thereto. Rather, a variety of counter arrangements can be used to implement the unique function of producing document recirculation and control of skewed turn-around guide 38 between its dotted and full-line positions of Fig. 3.

Document gate 29 (Fig. 1) opens as a result of counterclockwise rotation of shaft 30 (Fig. 2). Gate 29 is spring-biased to the closed position by means (not shown) and is opened by energization of a solenoid (not shown). During such opening, the shaft 30 rotates counterclockwise in the direction of arrow 73 (Fig. 6) approximately 5°. As a result, an arm extension 74 of the shaft engages a pivoted plastics member 75 (Fig. 6) and causes member 75 to pivot clockwise as indicated by arrow 76.

The counter is set manually by the operator to a copy count of from two to five copies by means of a finger lever 77, shown in broken lines. In Fig. 6, the lever 77 has been moved to the right to the five-copy-request position. In so doing, spring-loaded gear rack 78 has been moved so that its tooth 79 is now held against leftward movement by tooth 80 formed in pivotal member 75.

An extension 81 of the side plate member 82 (Fig. 2) is a stationary member. Spring 83 biases gear rack 78 to the left, and spring 84 biases member 75 for counterclockwise rotation about its axis.

Had a copy request of two been selected, the operator would have moved lever 77 to the right only a short distance, until this lever aligned with indicia two carried by a stationary plate (not shown). In this condition, tooth 80 co-operates with tooth 85. In a similar fashion, tooth 86 designates three copies and tooth 87 designates four copies.

When gear rack 78 is at any position other than its extreme left-hand home position, skewed turn-around guide 38 is in its full-line intercept position, and a document follows recirculating path 88. The construction and arrangement of guide 38 is such that the effects of gravity cause the guide to assume its full-line position (although it can be spring biased) whenever gear rack 78, and spring 83, are not operative to engage a lever 89 which is formed as an integral part of guide 38. The dotted line position of gear rack 78 and lever 89 show how guide 38 is forced to pivot counterclockwise, about its pivotal axis 90, to its dotted line non-intercept position, when all copies have been made, or when only one copy is requested. Note that a one copy request is indicated by merely placing a document in entry tray 20 (Fig. 1), and lever 77 (Fig. 6) is not moved to the right. When guide 38 is in its non-intercept position, the document follows exit path 91.

As shown, the counter is set to a five copy request. Every time gate 29 opens, arm extension 74 engages member 75, causing member 75 to rotate clockwise. In so doing, teeth 80 and 79 disengage, and gear rack 78 moves to the left a step-distance determined by the resulting interference between tooth 92 and one of teeth 93. The mechanism now remains in this position until such time as the drum position transducer (not shown) indicates that the trailing edge of the document has cleared the gate 29. In actual practice the closing of gate 29 is always set to occur for the longest legal size original document. When gate 29 closes, arm 74 releases member 75, and member 75 pivots counterclockwise, causing tooth 80 to now engage tooth 87. In this manner, the counter steps down one count for each recirculation of the original document through the imaging station.

## Claims

1. A recirculating document feeder comprising a document entry station (21) including entry alignment means (20, 27) for aligning a document against a longitudinally extending side reference edge (55), a stationary imaging station (32; 70) for line-scanning an original document moving therepast, and means (38) selectively to turn the document into a recirculating path including part of the reference edge back to the entry station, characterised in that the turning means (38) comprises a skewed turn-around guide formed as a partial cylinder whose cylindrical axis is inclined to a perpendicular from the reference edge, so as to cause the leading edge of a document to emerge from the guide skewed, so that the corner adjacent the reference edge is displaced therefrom without introducing a force which may disturb registration of the portion of the document then remaining in the imaging station, and recirculating alignment means (27, 48) downstream of the guide to re-align the document against the reference edge.

2. A feeder according to claim 1, in which the document entry station includes a laterally extending controllable gate (29) against which the leading edge of a document is registrable.

3. A feeder according to claim 1 or 2, in which the entry alignment means comprises a cupped roller (27) which deforms against a platform (20) at the entry station.

4. A feeder according to claim 3, in which the upper portion of the cupped roller (27) forms with a wall (48) the recirculating alignment means.

5. A feeder according to claim 1, 2, 3 or 4 in which the imaging station includes a generally flat transparent platform (32) over which a document moves, which platform is an extension of the entry station.

6. A feeder according to any preceding claim, including first document drive roller means on the downstream side of the imaging station, the bottom portion of which roller means is operable to supply longitudinal drive force to a document to move it towards the skewed turn-around guide.

7. A feeder according to claim 6, in which an upper portion of the first document drive roller means (35, 36) is operable to supply longitudinal drive force to a document emerging from the skewed turnaround guide.

8. A feeder according to any preceding claim, including a non-skewed turn-around guide (49) downstream of the recirculating alignment means, the non-skewed guide being arranged to receive the leading edge of a document and to direct the document downward into the entry station.

9. A feeder according to any preceding claim, including a second document drive roller means (26, 31), whose bottom portion provides longitudinal drive to a document at the entry station to move if towards the imaging station, and those upper portion provides longitudinal drive to a document in the recirculating path to move it towards the entry station.

10. A feeder according to claim 9 as appendant to claim 3 or any claim appendant to claim 3, in which the cupped roller is of the same general diameter as, and co-axial with, the second document drive roller means.

11. A feeder according to any preceding claim, wherein the skewed turn-around guide is movable between a first position in which the leading edge of a document is intercepted, and a second position in which the leading edge of a document continues travelling undeflected beyond the guide.

12. A feeder according to claim 11, including an exit turn-around guide adapted to receive the leading edge of an undeflected document, and to direct such a document upwards through a turn of approximately 180° to a document exit tray which is mounted generally above the feeder.

13. A feeder according to claim 2 or any claim appendant to claim 2, including a copy request counter whose count is decremented upon opening of the gate.

14. A feeder according to claim 13, as appendant to claim 11 or 12, in which control of the skewed guide between its first and second positions is responsive to the contents of the copy request counter.

**Revendications**

1. Dispositif d'alimentation de documents avec recirculation comportant un poste (21) d'entrée des documents comprenant des moyens d'alignement d'entrée (20, 27) servant à aligner le document contre un bord de référence latéral (55) disposé longitudinalement, un poste fixe de formation d'images (32; 70) servant à explorer ligne par ligne un document original se déplaçant devant ce poste, et un dispositif (38) servant à renvoyer le document au poste d'entrée en lui faisant suivre une voie de recirculation incluant une partie du bord de référence, caractérisé par le fait que le dispositif de renvoi (38) comporte un guide incliné de retournement réalisé sous la forme d'un cylindre partiel, dont l'axe est incliné par rapport à une perpendiculaire au bord de référence de manière à provoquer la sortie du bord avant d'un document hors du guide incliné de telle sorte que le coin voisin du bord de référence est écarté de ce dernier sans la mise en oeuvre d'une force susceptible de perturber le cadrage de la partie du document restant alors dans le poste de formation d'images, et des moyens (27, 48) d'alignement lors de la recirculation, situés en aval du guide de manière à réaligner le document contre le bord de référence.

2. Dispositif d'alimentation selon la revendication 1, dans lequel le poste d'entrée des documents comporte une porte (29) pouvant être commandée, s'étendant latéralement et contre laquelle le bord avant d'un document peut être aligné.

3. Dispositif d'alimentation selon la revendication 1 ou 2, dans lequel les moyens d'alignement d'entrée comprennent un galet en forme de coupelle (27), qui est déformé contre une plate-forme (20) au niveau du poste d'entrée.

4. Dispositif d'alimentation selon la revendication 3, dans lequel la partie supérieure du galet en forme de coupelle (27) forme, avec une paroi (48), les moyens d'alignement lors de la recirculation.

5. Dispositif d'alimentation selon la revendications 1, 2, 3 ou 4, dans lequel le poste de formation d'images comporte une plate-forme transparente (32) plate dans son ensemble, sur laquelle un document se déplace et qui est un prolongement du poste d'entrée.

6. Dispositif d'alimentation selon l'une quelconque des revendications précédentes, incluant un premier dispositif à rouleaux d'entraînement des documents, situé sur le côte aval du poste de formation d'images, la partie inférieure de ce dispositif à rouleaux pouvant être actionnée de manière à appliquer une force longitudinale d'entraînement à un document de manière à le déplacer en direction du guide incliné de retournement.

7. Dispositif d'alimentation selon la revendication 6, dans lequel une partie supérieure du premier dispositif (35, 36) à rouleaux d'entraînement de documents peut être actionnée de manière à appliquer une force d'entraînement longitudinale à un document sortant du guide incliné de retournement.

8. Dispositif d'alimentation selon l'une quelconque des revendications précédentes, comportant un guide de retournement non incliné (49) situé en aval des moyens d'alignement lors de la recirculation, le guide non incliné étant disposé de manière à recevoir le bord avant d'un document et à diriger le document vers le bas dans le poste d'entrée.

9. Dispositif d'alimentation selon l'une quelconque des revendications précédentes, incluant un second dispositif (26, 31) à rouleaux d'entraînement de documents, dont la partie inférieure applique un entraînement longitudinal à un document au niveau du poste d'entrée de manière à le déplacer vers le poste de formation d'images et dont la partie supérieure applique un entraînement longitudinal à un document dans la voie de recirculation de manière à le déplacer en direction du poste d'entrée.

10. Dispositif d'alimentation selon la revendication 9, en dépendance de la revendication 3 ou d'une revendication quelconque en dépendance de la revendication 3, dans lequel le rouleau en forme de coupelle possède le même diamètre général que le second dispositif à rouleaux d'entraînement des documents, et est coaxial avec ce dispositif.

11. Dispositif d'alimentation selon l'une quelconque des revendications précédentes, dans lequel le guide de retournement incliné est déplaçable entre la première position, dans laquelle le bord avant d'un document est intercepté, et une seconde position dans lequel le bord avant d'un document continue à se déplacer sans être dévié au-delà du guide.

12. Dispositif d'alimentation selon la revendication 11, incluant un guide de retournement de sortie apte à recevoir le bord avant d'un document non dévié et à diriger un tel document vers le haut suivant un cercle d'environ 180° en direction d'un casier de sortie des documents, qui est disposé dans son ensemble au-dessus du dispositif d'entraînement.

13. Dispositif d'alimentation selon la revendication 2 ou une revendication quelconque en dépendance de la revendication 2, incluant un compteur de demandes de copies, dont l'état de comptage régresse lors de l'ouverture de la porte.

14. Dispositif d'alimentation selon la revendication 13, en dépendance de la revendication 11 ou 12, dans lequel la commande du guide incliné entre sa première et sa seconde position dépend de l'état de comptage du compteur de demandes de copies.

## Patentansprüche

1. Umlauf-Transportvorrichtung für Dokumente mit einer Dokumenteneintrittsstation (21), welche Eintrittsausrichtmittel (20, 27) zur Ausrichtung eines Dokuments gegen eine in Längsrichtung sich erstreckende Seitenbezugskante (55) enthält, einer stationären Abbildungsstation (32; 70) zur zeilenweisen Abtastung einer daran vorbeilaufenden Dokumentenvorlage, und Mitteln (38) zur selektiven Wendung des Dokuments in einen einen Teil der Bezugskante enthaltenden Umlaufweg zurück zur Eintrittsstation, dadurch gekennzeichnet, daß die Wendemittel (38) eine schrag verlaufende Wendeführung, die als Teilzylinder ausgebildet ist, dessen Zylinderachse gegenüber einer Senkrechten auf die Bezugskante geneigt ist, wodurch bewirkt wird, daß die Vorderkante eines Dokuments aus der Führung schräg verlaufend austritt, so daß die der Bezugskante benachbarte Ecke gegenüber dieser versetzt ist ohne eine Kraft einzuführen, welche die Lagegenauigkeit des dann in der Abbildungsstation verbleibenden Abschnitts des Dokuments stören könnte, und Umlauf-Ausrichtmittel (27, 48) der Führung nachgelagert zur Wiederausrichtung des Dokuments gegen die Bezugskante aufweist.

2. Transportvorrichtung nach Anspruch 1, bei welcher die Dokumenteneintrittsstation ein sich seitlich erstreckendes steuerbares Tor (29) aufweist, gegen welches die Vorderkante eines Dokuments ins Register gebracht werden kann.

3. Transportvorrichtung nach Anspruch 1 oder 2, bei welcher die Eintrittsausrichtmittel eine schalenförmige Rolle (27) umfassen, welche sich gegen eine Plattform (20) in der Eintrittsstation verformt.

4. Transportvorrichtung nach Anspruch 3, bei welcher der obere Abschnitt der schalenförmigen Rolle (27) mit einer Wand (48) die Umlauf-Ausrichtmittel bildet.

5. Transportvorrichtung nach Anspruch 1, 2, 3 oder 4, bei welcher die Abbildungsstation eine im wesentlichen ebene transparente Plattform (32) enthält, über welche sich ein Dokument bewegt, wobei die Plattform ein Fortsatz der Eintrittsstation ist.

6. Transportvorrichtung nach irgendeinem vorstehenden Anspruch, welche erste Dokumentenantriebsrollenmittel auf der Ausgangsseite der Abbildungsstation enthält, wobei der untere Abschnitt der Rollenmittel eine längsgerichtete Antriebskraft auf ein Dokument ausübend betreibbar ist, um dieses zur schräg verlaufenden Wendeführung hin zu bewegen.

7. Transportvorrichtung nach Anspruch 6, bei welcher ein oberer Abschnitt der ersten Dokumentenantriebsrollenmittel (35, 36) eine längsgerichtete Antriebskraft auf ein aus der schräg verlaufenden Wendeführung austretendes Dokument ausübend betreibbar ist.

8. Transportvorrichtung nach irgend einem vorstehenden Anspruch, welche eine nicht schräg verlaufende Wendeführung (49) den Umlauf-Ausrichtmitteln nachgelagert aufweist, wobei die nicht schräg verlaufende Führung so angeordnet ist, daß sie die Vorderkante eines Dokuments erhält und das Dokument nach unten in die Eintrittsstation lenkt.

9. Transportvorrichtung nach irgendeinem vorstehenden Anspruch, welche zweite Dokumentenantriebsrollenmittel (26, 31) enthält, deren unterer Abschnitt einen Längsantrieb auf ein Dokument an der Eingangsstation zur Bewegung desselben zur Abbildungsstation liefert und deren oberer Abschnitt einen Längsantrieb auf ein Dokument im Umlaufweg zur Bewegung desselben zur Eintrittsstation liefert.

10. Transportvorrichtung nach Anspruch 9 in Rückbezug auf Anspruch 3 oder irgendeinen auf Anspruch 3 rückbezogenen Anspruch, bei welcher die schalenförmige Rolle im wesentlichen den gleichen Durchmesser hat wie die zweiten Dokumentenantriebsrollenmittel und mit diesen koaxial ist.

11. Transportvorrichtung nach irgendeinem vorstehenden Anspruch, bei welcher die schräg verlaufende Wendeführung zwischen einer ersten Stellung, in welcher die Vorderkante eines Dokuments abgefangen wird, und einer zweiten Stellung, in welcher die Vorderkante eines Dokuments unabgelenkt über die Führung hinaus weiterläuft, bewegbar ist.

12. Transportvorrichtung nach Anspruch 11, welche eine Austrittswendeführung enthält, die zur Aufnahme der Vorderkante eines unabgelenkten Dokuments und zur Lenkung eines solchen Dokuments nach oben über eine Wendung von ungefähr 180° zu einer Dokumentenaustrittsschale, die im wesentlichen oberhalb der Transportvorrichtung angebracht, ist, eingerichtet ist.

13. Transportvorrichtung nach Anspruch 2 oder irgendeinem auf Anspruch 2 rückbezogenen Anspruch, welche einen Kopieanforderungszähler enthält, dessen Zählwert mit

15 · 0 034 269 · 16

Öffnung des Tores dekrementiert wird.

14. Transportvorrichtung nach Anspruch 13 in Rückbezug auf Anspruch 11 oder 12, bei welcher die Steuerung der schräg verlaufenden Führung zwischen ihrer ersten und ihrer zweiten Stellung auf den Inhalt des Kopieanforderungszählers anspricht.

9

# FIG. 1

0 034 269

## FIG. 2

2

## FIG. 3

FIG. 4

# FIG. 5

# FIG. 6